# DEMANDE DE BREVET EUROPEEN

(11) **EP 0 710 044 A2**
(43) Date de publication de la demande: **01.05.1996**
(21) Numéro de dépôt: 95402367.7
(22) Date de dépôt: 24.10.1995
(51) Int. Cl.: H04Q 7/38, H04Q 7/30

(54) **Procédé de changement de cellule dans un réseau cellulaire de radiocommunications avec des mobiles et équipement d'infrastructure pour la mise en oeuvre du procédé**

(30) Priorité: 26.10.1994 FR 9412819
(71) Demandeur: ALCATEL N.V., NL-2288 BH Rijswijk (NL); ALCATEL MOBILE COMMUNICATION FRANCE, F-75008 Paris (FR)
(72) Inventeur: De Seze, Fabrice, F-75017 Paris (FR); Kumar, Vinod, F-75005 Paris (FR)
(74) Mandataire: Pothet, Jean Rémy Emile Ludovic

(57) **Abrégé**

Le procédé comprend une étape (S2) de commutation intercellulaire d'une communication établie avec un mobile à partir d'un premier canal (F0, IT3) associé une première station de base (BTS(n-1)) vers un second canal (F0,IT3) qui est associé à une seconde station de base (BTS(n)) et qui est identique audit premier canal. Il est caractérisé en ce que ladite étape de commutation intercellulaire (S2) est précédée par les étapes de
sélection dudit premier canal (F0, IT3) de telle sorte que le second canal (F0, IT3) qui lui est identique soit libre dans la seconde station de base (BTS(n)), et
commutation intracellulaire (S1) de ladite communication à partir d'un canal courant (F3, IT2) vers ledit premier canal sélectionné (FO, IT3), lesdits canaux courant et sélectionné étant tous deux associés à ladite première station de base (BTS(n-1)).

## Description

La présente invention concerne de manière générale un procédé de changement de cellule d'un mobile dans un réseau cellulaire de radiocommunications avec des mobiles. Un tel changement de cellule consiste à commuter une communication établie avec le mobile à partir d'un canal courant associé à une première cellule vers un canal suivant associé à une seconde cellule lors du déplacement dudit mobile, en vue d'assurer la continuité de la communication. Le terme "handover" est couramment utilisé dans la littérature anglo-saxonne pour désigner un tel processus de changement de cellule.

L'invention s'applique à des réseaux cellulaires de radiocommunications avec des mobiles qui sont synchronisés. Un réseau cellulaire est dit synchronisé si des stations de base dans le réseau sont synchronisées entr'elles à une différence de marche temporelle près sensiblement nulle. Les intervalles temporels élémentaires de transport de canal émis et reçus par deux stations de base quelconques du réseau de radiocommunications sont synchronisée entre eux.

En outre, l'invention vise à "sécuriser" un tel changement de cellule qui constitue une étape délicate dans la gestion d'une communication établie avec un mobile, en évitant une dégradation trop sensible de cette communication au cours de l'étape de handover.

La demande de brevet européen EP-A-O 347 396 décrit un procédé de changement de cellule d'un mobile selon lequel une communication établie est commutée à partir d'un premier canal véhiculé par une première station de base dans une première cellule vers un second canal qui est véhiculé par une seconde station de base dans une seconde cellule et qui est de préférence identique audit premier canal. L'identité des premier et second canaux se traduit dans le cadre du GSM par des mêmes intervalles de temps et mêmes fréquences. Un test est prévu selon ce document pour vérifier la disponibilité dudit second canal dans la seconde cellule, préalablement au handover. Il est, en outre, établi que, temporairement, préalablement au handover, la communication est simultanément émise dans les premier et second canaux des première et seconde cellules respectives. Cette émission simultanée de la communication par les deux stations de base vers le mobile vise à remédier au risque d'interruption accidentelle de la communication durant la phase critique du handover, pour laquelle le mobile est à une distance maximale des deux stations de base, et la puissance des signaux reçus par le mobile en provenance de ces deux stations de base est donc minimale.

Dans un réseau synchronisé, sachant que la différence de synchronisation entre deux stations de base est nulle, l'écart des instants de réception par un mobile d'une même donnée émise simultanément dans deux canaux respectivement par deux stations de base est limitée à la différence des temps de propagation, ou différence de marche temporelle entre le mobile d'une part, et les deux stations de base d'autre part. Cet écart est inhibé par des techniques de filtrage d'égalisation dans le mobile, s'il reste inférieur à une valeur donnée, et les deux stations de base opèrent alors en diversité d'émission pour le mobile.

Selon cette demande de brevet, une augmentation du taux de réussite de handovers intercellulaires sur des mêmes canaux ne peut être obtenue qu'au détriment d'une optimisation réduite du plan cellulaire de réutilisation de fréquence. En effet, un taux élevé de réussite de handovers sur des mêmes canaux nécessite de prévoir des fréquences identiques dans des cellules voisines, et ces fréquences ne peuvent être utilisées simultanément dans deux cellules voisines pour éviter des interférences inter-canaux.

Pour des cellules de faible dimension relativement au produit de la vitesse moyenne des mobiles dans ces cellules par la durée moyenne des communications, les handovers sont fréquents et impliquent de réserver pour ces handovers un grand nombre de canaux identiques dans des cellules voisines relativement au nombre total de canaux dans chaque cellule, et donc diminuer l'efficacité spectrale des plans de réutilisation de fréquence.

L'invention vise à remédier à l'inconvénient précité de la technique antérieure selon laquelle il existe un antagonisme entre un taux élevé de réussite de handover intercellulaire sur des canaux identiques et une réutilisation d'un nombre très réduit de canaux identiques dans des cellules adjacentes, ou voisines.

A cette fin, un procédé de changement de cellule dans un réseau cellulaire de radiocommunications avec des mobiles comprenant une étape de commutation intercellulaire d'une communication établie avec un mobile à partir d'un premier canal associé à une première station de base vers un second canal qui est associé à une seconde station de base et qui est identique audit premier canal,
est caractérisé selon l'invention en ce que ladite étape de commutation intercellulaire est précédée par les étapes de
sélection dudit premier canal de telle sorte que le second canal qui lui est identique soit libre dans la seconde station de base, et
commutation intracellulaire de ladite communication à partir d'un canal courant vers ledit premier canal sélectionné, lesdits canaux courant et sélectionné étant tous deux associés à ladite première station de base.

Par ailleurs, l'étape de commutation intercellulaire est suivie, dans ladite seconde station de base, par une étape de commutation intracellulaire de ladite communication établie à partir dudit second canal vers un canal suivant libre qui constitue un canal courant dans ladite seconde station de base.

Il est prévue avantageusement une émission simultanée des données de ladite communication établie par lesdites première et seconde stations de base, respectivement dans lesdits premier et second canaux identiques.

Selon une première variante, l'émission des données de la communication simultanément par les première station de base et seconde station de base, est opérée en fonction d'une mesure de différence de marche temporelle entre des données émises par le mobile respectivement dans les premier et second canaux.

Selon une seconde variante, l'émission des données de la communication simultanément par les première station de base et seconde station de base est opérée en réponse à la réception par la seconde station de base, préalablement activée par voie de message ou électrique, d'un niveau d'un signal émis par le mobile dans le second canal qui est supérieur à un seuil prédéterminé.

L'invention fournit en outre un équipement d'infrastructure pour la mise en oeuvre du procédé. L'équipement comprend des moyens pour recevoir à partir d'un mobile des messages de mesure de niveau de signaux qui sont reçus par ledit mobile en provenance de stations de base respectives afin de déclencher des étapes de changement de cellule, et est caractérisé en ce qu'il comprend une table de l'état de disponibilité de canaux qui sont identiques dans une pluralité de stations de base, afin de sélectionner ledit premier canal dans ladite première cellule qui est identique au second canal libre dans une seconde cellule lors de ladite étape de commutation intracellulaire dans ladite première station de base.

D'autres caractéristiques et avantages de la présente invention apparaîtront plus clairement à la lecture de la description suivante en référence aux dessins annexés correspondants dans lesquels :
- la figure 1 schématise des étapes de changement de cellule selon l'invention, chaque cellule étant représentée sous la forme d'un diagramme cartésien de canaux véhiculés par la station de base respective associée à ladite chaque cellule; et
- la figure 2 représente trois zones géographiques sensiblement hexagonales associées à trois cellules respectives, pour expliquer la mise en oeuvre d'une émission simultanée d'une communication par deux stations de base impliquées dans un changement de cellule.

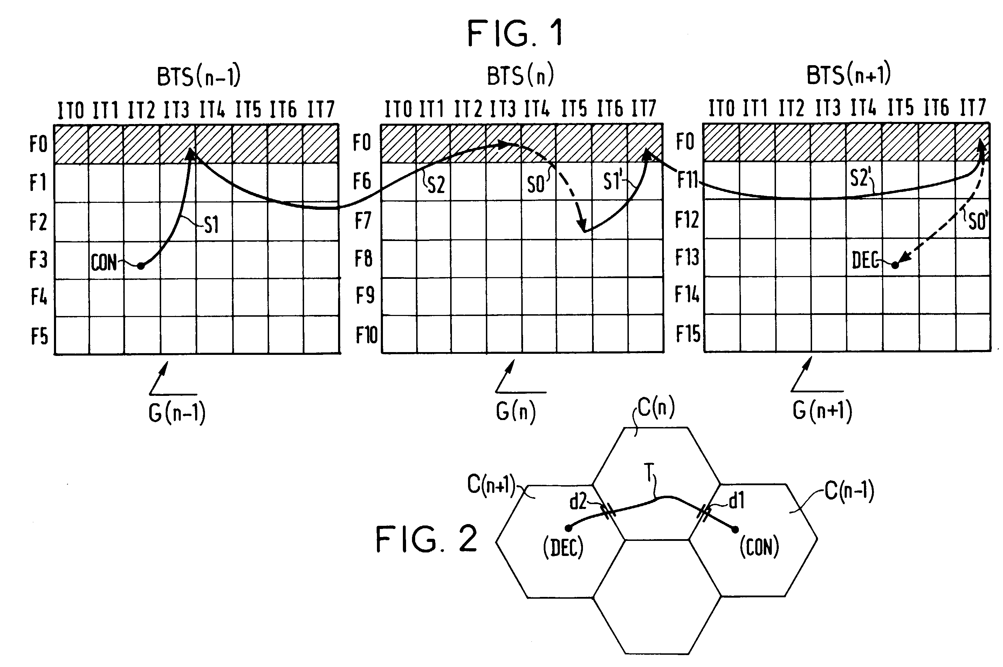

En référence à la figure 1, sont schématisés trois groupes de canaux G(n-1), G(n) et G(n+1) associés respectivement à trois stations de base BTS(n-1), BTS(n) et BTS(n+1). L'invention est décrite dans le cadre particulier d'un réseau numérique de radiocommunications avec des mobiles, tel que GSM, et un canal destiné à véhiculer une communication établie est défini par un couple Fréquence - Intervalle Temporel (F, IT). A des fins de simplification seuls sont représentés des canaux montants, respectivement descendants, des liaisons établies avec des mobiles, les canaux descendants, respectivement montants, correspondants pouvant aisément être déduits par translation fréquentielle et temporelle des diagrammes cartésiens représentant les groupes de canaux G(n-1), G(n) et G(n+1). Le terme "canal" n'est pas limité à un couple fréquence-intervalle temporel et peut consister selon d'autres réalisations ou bien uniquement en un intervalle temporel, ou bien uniquement en une fréquence, ou encore en une séquence de couples de Fréquence-Intervalle Temporel en technique de saut de fréquence.

Selon la réalisation de la figure 1 et à titre non limitatif, chaque station de base BTS(n-1), BTS(n) et BTS (n+1) est définie par un groupe de (8 x 6) canaux montants associés au produit cartésien de 6 fréquences et 8 intervalles temporels ITO à IT7. La station de base BTS (n-1) produit les six fréquences F0, F1, F2, F3, F4 et F5, la station de base BTS(n) produit les six fréquences F0, F6, F7, F8, F9 et F10 et la station de base BTS (n+1) les six fréquences F0, F11, F12, F13, F14 et F15.

Chaque station de base comprend au moins un canal identique à un autre canal dans une station de base qui définit une cellule adjacente à la cellule associée à ladite chaque station de base. Dans le cadre de la réalisation décrite, le nombre de canaux identiques dans les trois stations est égal à huit et ces huit canaux sont définis par le produit cartésien d'une fréquence commune F0 aux trois stations et de huit intervalles temporels IT0, IT1, IT2, IT3, IT4, IT5, IT6 et IT7.

Des flèches en trait continu et en trait discontinu repèrent des étapes du procédé selon l'invention.

Initialement, le mobile se connecte (étape CON) à un canal défini par le couple (F3, IT2) parmi l'ensemble des canaux associés à la station de base BTS(n-1), dite première station de base. De manière connue dans le G.S.M, le mobile transmet périodiquement vers cette première station de base BTS(n-1) à laquelle il est connecté des messages de mesure de niveau des signaux reçus en provenance des stations de base avoisinantes. Ces messages sont transmis dans le canal SACCH (Slow Associated Control CHannel en terminologie anglo-saxonne) à l'interface radio entre mobile et station de base, pour être remontés vers l'infrastructure du réseau mobile, typiquement un contrôleur de station de base (BSC pour Base Station Controler en terminologie anglo-saxonne).

A l'initiative de ce contrôleur de station de base, en fonction des messages de mesure de niveau reçus, est prise une décision de déclenchement d'un changement de cellule. Ce changement de cellule consiste à commuter la communication établie avec le mobile à partir du canal courant (F3, IT2) associé à la première station de base BTS(n-1) vers un canal suivant (F7, IT5) associé à la seconde station de base BTS(n), cette dernière étant identifiée à partir des messages de mesure de niveau comme présentant une niveau maximal en réception par le mobile.

Selon l'invention, en référence à la figure 1, ce changement de cellule comprend trois étapes successives S1, S2 et S0. La première étape S1 consiste en une commutation intracellulaire de la communication établie. Selon cette étape S1, la communication établie est commutée du canal courant (F3, IT2) vers un premier canal (F0, IT3) qui est identique dans les, ou commun aux, deux stations de base BTS(n-1) et BTS(n) parmi tous les canaux [F0 x (IT0, IT1, ..., IT7)], et qui de plus est libre dans les première et seconde stations de base . Il est rappelé en effet que la fréquence F0 est une fréquence commune aux deux stations de base BTS(n-1) et BTS(n). Cette étape de commutation intracellulaire est précédée par une étape préliminaire de sélection de canal par un contrôleur de station de base. Le contrôleur, ou plus généralement un quelconque équipement d'infrastructure du réseau mobile, comprend une table de l'état de disponibilité des canaux communs à, ou identiques dans, l'ensemble des stations de base qu'il contrôle, cette table étant mise à jour à chaque début et fin de changement de cellule. Grâce à une telle table, le premier canal (F0, IT3) vers lequel est commutée la communication en intracellulaire, à partir du canal courant (F3, IT2), est sélectionné selon l'étape de sélection de telle sorte que le second canal qui lui est identique soit libre dans la seconde station de base. Il est à noter que cette étape de commutation intracellulaire ne conduit pas aux inconvénients conventionnels rencontrés lors d'un handover intercellulaire en terme de synchronisation du mobile, sachant que le mobile est déjà synchronisé avec la station de base BTS(n-1). En effet, les deux canaux respectifs (F3, IT2) et (F0, IT3) à partir duquel et vers lequel la communication est commutée appartiennent à la même station de base BTS(n-1).

Suite à cette première étape S1, l'invention propose la seconde étape S2 du type décrit dans la demande de brevet citée dans le préambule de la description. Selon cette seconde étape S2, il est opérée une commutation intercellulaire de la communication établie à partir du premier canal (F0, IT3) associé à la première station de base BTS(n-1) vers le second canal (F0, IT3) identique audit premier canal et associé à la seconde station de base BTS(n).

De façon avantageuse, dans l'objectif de diminuer le risque d'interruption de la communication établie, il peut être prévue une émission simultanée des données de la communication par les première et seconde stations de base BTS(n-1) et BTS(n) respectivement dans les premier et second canaux identiques (F0, IT3). Cette émission simultanée recouvre temporellement au moins en partie l'étape de commutation intercellulaire, ou seconde étape, S2, et est activée postérieurement à l'étape de commutation intracellulaire S1 dans la première station de base. Deux variantes sont proposées par l'invention pour activer cette émission simultanée par les deux stations de base BTS(n-1) et BTS(n) de la communication établie. Typiquement, toutes les cellules dans le réseau mobile ont des dimensions respectives sensiblement identiques. En pratique, l'écart entre les dimensions respectives de deux cellules est limité par une tolérance fixée par la technique de filtrage d'égalisation dans le terminal mobile. La tolérance d'égalisation est définie par une différence de marche temporelle maximale admissible entre deux signaux identiques reçus par le terminal. Pour une différence de marche inférieure à la différence de marche temporelle maximale admissible, l'égalisation a pour but d'absorber ladite différence de marche temporelle et ainsi, selon la technique antérieure, remédier au problème résultant de la propagation par multi-trajets. Elle est typiquement de 20 microsecondes pour les terminaux G.S.M.

Est maintenant décrite la première variante de l'invention relative à l'activation d'une émission simultanée par les deux stations de base BTS(n-1) et BTS(n) de la communication établie. Initialement, des données montantes, émises du mobile vers l'infrastructure 1, et descendantes, émises de l'infrastructure vers le mobile, de la communication sont véhiculées dans le premier canal (F0, IT3) et transitent à travers la première station de base BTS(n-1), de rang (n-1). Dès lors que cette communication est véhiculée à travers le premier canal (F0, IT3) de la station de base BTS(n-1), l'infrastructure, typiquement contrôleur de station de base, active en réception sur le second canal (F0, IT3) identique au premier canal, la seconde station de base BTS(n) de rang n. La seconde station de base BTS(n) est déterminée par l'infrastructure en résultat de la décision de changement de cellule qui précède l'étape de commutation intracellulaire S1. En réponse, la communication est toujours véhiculée dans le premier canal (F0, IT3) associé à la première station de base BTS(n-1), et, en outre, les données montantes de la communication qui sont émises par le mobile sont reçues par la seconde station de base BTS(n) activée en réception. En raison de la différence entre les deux distances séparant le mobile respectivement des première et seconde stations de base BTS(n-1) et BTS(n), les données montantes de la communication reçues par l'infrastructure à travers la première station de base BTS(n-1) dans le premier canal (F0, IT3), et ces mêmes données montantes de la communication reçues par l'infrastructure à travers la seconde station de base BTS(n) dans le second canal (F0, IT3), identique au premier canal, présentent entr'elles une différence de marche temporelle. Cette différence de marche temporelle est égale à la différence des temps de propagation entre le mobile d'une part, et les deux stations de base BTS(n-1) et BTS(n) d'autre part. Il est déterminé dans l'infrastructure si cette différence de marche temporelle mesurée est inférieure à un seuil prédéterminé. Dès lors que ladite différence de marche temporelle est inférieure au seuil prédéterminé, il est prévue l'émission simultanée, pendant une durée donnée, des données descendantes de la communication vers le mobile dans lesdits premier et second canaux identiques (F0, IT3) respectivement par lesdites première et seconde stations de base BTS(n-1) et BTS(n), l'émission des données descendantes dans le canal étant déjà effective. Des mesures de puissance et mesures de qualité des signaux reçus par les première et seconde stations de base BTS(n-1) et BTS(n) respectivement dans les premier canal et second canal, peuvent en outre être prévues pour valider l'étape d'émission simultanée. Ainsi une technique de diversité en émission est mise en oeuvre par les stations de base BTS(n-1) et BTS(n), qui garantit une meilleure qualité de réception de la communication par le mobile. En outre, cette diversité en émission n'est effective que pendant la durée donnée afin d'éviter un brouillage entre les données transmises dans les canaux courant et suivant. En pratique, cette durée donnée est telle que la différence des temps de propagation respectifs entre le mobile et la station de base BTS(n-1) d'une part, et le mobile et la station de base BTS(n) d'autre part, pendant ladite durée donnée ne soit pas trop élevée. Deux variantes sont proposées pour le choix de la durée donnée. Selon une première variante, la durée donnée est une durée fixe prédéterminée mémorisée et définie dans l'infrastructure. Selon une seconde variante, cette durée donnée expire dès lors que la différence de marche temporelle redevient supérieure à un seuil prédéterminé pouvant être identique au seuil prédéterminé déclenchant l'émission simultanée.

Selon la seconde variante de l'invention relative à l'activation d'une émission simultanée par les deux stations de base BTS(n-1) et BTS(n) de la communication établie, la seconde station de base BTS(n) est préalablement également activée par voie de message, via le contrôleur, dès lors que le premier canal (F0, IT3) est alloué au mobile pour la communication établie avec la première station de base suite à la commutation de canal intracellulaire. La seconde station de base écoute, en réponse à cette activation, le signal émis par le mobile dans le second canal (F0, IT3) identique au premier canal, et émet simultanément sur ce canal avec la première station de base dès lors que le niveau reçu dans ce canal est supérieur à un seuil prédéterminé. Le choix du paramètre de niveau pour caractériser la liaison peut être étendu à la puissance, la qualité, ou autre.

Pour les deux variantes précitées, il peut en outre être prévu que l'étape S2 de commutation intercellulaire est déclenchée en réponse à des traitements d'au moins l'un des deux signaux respectifs fournis par les deux stations de base écoutant le mobile dans des canaux identiques (F0, IT3) dans les deux cellules BTS(n-1) et BTS(n), ces deux signaux correspondant au même signal émis par le mobile. Typiquement, les traitements consistent en des traitements de mesure de puissance ou mesure de qualité.

L'homme du métier conviendra que les étapes de commutation intracellulaire S1 et commutation intercellulaire S2 opérées selon l'invention lors d'un changement de cellule peuvent être activées successivement sans délai entr'elles dès que la nécessité d'un changement de cellule est détectée par le contrôleur de station de base en résultat d'un traitement des messages de niveau transmis par le mobile qui écoute des canaux des cellules voisines. Dans ce cas, il n'est pas prévu d'émettre simultanément les données de la communication dans les deux canaux identiques émis par les première et seconde stations de base.

Sachant que les canaux [FO x (IT0,...,IT7)] communs à deux cellules voisines sont réservés aux changements de cellules, il est préférable de ne pas maintenir la communication dans un canal commun, tel que (FO, IT3), après un changement de cellule.

L'invention prévoit pour cela, selon la troisième étape de changement de cellule, notée SO dans la figure 1, de commuter en intracellulaire dans la seconde station de base la communication à partir du second canal commun (F0, IT3) vers un canal libre n'appartenant pas à l'ensemble des canaux communs à des cellules voisines. Ce canal est noté (F7, IT5) dans la figure 1.

Ainsi les canaux, ou ressources, communs à au moins deux cellules adjacentes ne sont pas inutilement bloqués par des communications- en cours, et restent donc libres pour opérer des handovers intracellulaires ultérieurs. Comme montré par les étapes Sl', S2' et SO', les étapes selon l'invention peuvent être répétées à chaque fois, lors de changements de cellule successifs du mobile, jusqu'à la déconnexion de la communication DEC.

La figure 2 montre trois cellules C(n-1), C(n) et C(n+1), respectivement associées aux stations de base BTS(n-1), BTS(n) et BTS(n+1), et schématiquement représentées sous forme hexagonale. Un trait continu T représente le trajet suivi par le mobile au cours de la communication et deux segments dl et d2 portés par ce trait continu T désignent deux portions de déplacement du mobile pendant lesquelles les couples respectifs de stations de base BTS(n-1), BTS(n) et BTS(n), BTS(n+1) émettent simultanément les données de la communication établie. Ces émissions simultanées se produisent pour des positions du mobile sensiblement frontalières à deux cellules adjacentes, qui correspondent à des faibles niveaux de fiabilité de communication. Une émission simultanée de la communication par deux stations de base diminue donc le risque de rupture de cette communication selon le principe de la diversité en émission.

L'homme du métier appréciera que des modifications peuvent être apportées dans le cadre de l'invention. Notamment, il peut être prévu que le mobile est écouté non pas par une unique seconde station, outre la première station, mais par une pluralité de secondes stations, préalablement activées par voie de message ou électrique. Dans ce cas, l'étape de commutation intercellulaire est déclenchée en réponse à des traitements des signaux respectifs produits par la première station de base et la pluralité de secondes stations de base, qui correspondent tous au même signal émis par le mobile, et vise à sélectionner l'une de ces secondes cellules vers laquelle est commutée la communication établie.

## Revendications

1. Procédé de changement de cellule dans un réseau cellulaire de radiocommunications avec des mobiles, ledit procédé comprenant une étape (S2) de commutation intercellulaire d'une communication établie avec un mobile à partir d'un premier canal (F0, IT3) associé à une première station de base (BTS(n-1)) vers un second canal (F0,IT3) qui est associé à une seconde station de base (BTS(n)) et qui est identique audit premier canal,
caractérisé en ce que ladite étape de commutation intercellulaire (S2) est précédée par les étapes de
sélection dudit premier canal (F0, IT3) de telle sorte que le second canal (F0, IT3) qui lui est identique soit libre dans la seconde station de base (BTS(n)), et
commutation intracellulaire (S1) de ladite communication à partir d'un canal courant (F3, IT2) vers ledit premier canal sélectionné (FO, IT3), lesdits canaux courant et sélectionné étant tous deux associés à ladite première station de base (BTS(n-1)).

2. Procédé conforme à la revendication 1, caractérisé en ce que ladite étape de commutation intercellulaire (S2) est suivie, dans ladite seconde station de base (BTS(n)), par une étape de commutation intracellulaire (S0) de ladite communication établie à partir dudit second canal (F0,IT3) vers un canal suivant libre (F7, IT5) qui constitue un canal courant dans ladite seconde station de base (BTS(n)).

3. Procédé conforme à la revendication 1 ou 2, caractérisé par une émission simultanée des données de ladite communication établie par lesdites première et seconde stations de base (BTS(n-1), BTS(n)), respectivement dans lesdits premier et second canaux identiques (F0, IT3).

4. Procédé conforme à la revendication 3, caractérisé en ce que ladite émission des données de la communication établie simultanément par les première station de base (BTS(n-1) et seconde station de base (BTS(n)), est opérée en fonction d'une mesure de différence de marche temporelle entre des données émises par le mobile respectivement dans les premier et second canaux.

5. Procédé conforme à la revendication 3, caractérisé en ce que ladite émission des données de la communication établie simultanément par les première station de base et seconde station de base est opérée en réponse à la réception par la seconde station de base (BTS(n), préalablement activée par voie de message ou électrique, d'un niveau d'un signal émis par le mobile dans le second canal qui est supérieur à un seuil prédéterminé.

6. Equipement d'infrastructure pour la mise en oeuvre du procédé conforme à l'une quelconque des revendications précédentes, comprenant des moyens pour recevoir à partir d'un mobile des messages de mesure de niveau de signaux qui sont reçus par ledit mobile en provenance de stations de base respectives afin de déclencher des étapes de changement de cellule, caractérisé en ce qu'il comprend une table de l'état de disponibilité de canaux qui sont identiques dans une pluralité de stations de base, afin de sélectionner ledit premier canal dans ladite première cellule qui est identique au second canal libre dans une seconde cellule lors de ladite étape de commutation intracellulaire dans ladite première station de base.
